# EUROPÄISCHE PATENTANMELDUNG

(11) **EP 0 718 133 A1**
(43) Veröffentlichungstag der Anmeldung: **26.06.1996**
(21) Anmeldenummer: 95118921.6
(22) Anmeldetag: 01.12.1995
(51) Int. Cl.: B60H 1/03, B60H 1/00

(54) **Heizsystem, insbesondere für Kraftfahrzeuge**

(30) Priorität: 23.12.1994 DE 4446152
(71) Anmelder: Firma J. Eberspächer, D-73730 Esslingen (DE)
(72) Erfinder: Humburg, Michael, D-73035 Göppingen (DE)

(57) **Zusammenfassung**

Ein nach Art eines Heizkörpers wirkender Wärmetauscher (1) kann über einen fluidischen Wärmeträgerkreislauf, insbesondere Wasserkreislauf, thermisch mit einer ersten Wärmequelle (Verbrennungsmotor 2) und/oder einer zweiten Wärmequelle (unabhängig vom Verbrennungsmotor betreibbarer Brenner 3) thermisch gekoppelt werden. Durch thermische Stellelemente (13) kann bei der Steuerung des Wärmeträgerkreislaufes zusätzlich zu anderen Parametern auch die Temperatur der ersten Wärmequelle berücksichtigt werden.

## Beschreibung

Die Erfindung betrifft ein insbesondere für Kraftfahrzeuge vorgesehenes Heizsystem, bei dem ein nach Art eines Heizkörpers wirkender Wärmetauscher über einen fluidischen Wärmeträgerkreislauf, insbesondere Wasserkreislauf, thermisch mit einer ersten Wärmequelle, insbesondere einem zum Antrieb des Fahrzeuges dienenden Verbrennungsmotor, und/oder einer weiteren Wärmequelle, insbesondere einem vom Fahrzeugmotor unabhängig betreibbaren Brenner, thermisch koppelbar und eine Ventilanordnung in Abhängigkeit vom Betriebszustand der ersten Wärmequelle zwischen einem ersten Zustand, bei dem das Wärmeträgermedium bzw. zumindest ein großer Teil desselben über beide Wärmequellen geleitet wird, und einem zweiten Zustand umschaltbar ist, bei dem das Wärmeträgermedium zumindest im wesentlichen nur über die zweite Wärmequelle geleitet wird, nach Patent ... (P 43 24 371.1-16).

Bei einem aus der DE 42 29 608 C1 bekannten derartigen Heizsystem eines Kraftfahrzeuges mit Verbrennungsmotor kann das als Wärmeträgermedium vorgesehene Kühlwasser des Verbrennungsmotors nur dann wirksam zum Wärmetauscher des Heizsystems gefördert werden, wenn eine dem Verbrennungsmotor zugeordnete Kühlwasserpumpe einen höheren Druck erzeugt, weil die Ventilanordnung durch eine Ventilfeder ständig gegen den Druck der Kühlwasserpumpe in Richtung des zweiten Zustandes beaufschlagt wird, in dem lediglich die zweite Wärmequelle, d.h. der Brenner, thermisch mit dem Wärmetauscher gekoppelt ist. Da die Kühlwasserpumpe typischerweise hydrodynamisch arbeitet und je nach Drehzahl des Verbrennungsmotors mit großer oder kleiner Geschwindigkeit läuft, verändert sich der Kühlwasserdruck sehr stark mit der Drehzahl des Motors. Dies ist gleichbedeutend damit, daß der Motor bei niedriger Drehzahl praktisch vom Wärmetauscher abgekoppelt wird. Damit kann der Motor bei Leerlaufbetrieb nicht mehr zur Fahrzeugheizung beitragen.

Aufgabe der Erfindung ist es nun, bei einem Heizsystem der eingangs angegebenen Art eine verbesserte Ausnutzung der Wärme der ersten Wärmequelle zu ermöglichen.

Diese Aufgabe wird erfindungsgemäß dadurch gelöst, daß die Ventilanordnung ein mit dem Wärmeträgermedium der ersten Wärmequelle thermisch gekoppeltes thermisches Arbeits- bzw. Stellelement aufweist, welches oberhalb eines Schwellwertes der Temperatur des Wärmeträgermediums den ersten Zustand einstellt oder dessen Einstellung erleichtert bzw. freigibt.

Die Erfindung beruht auf dem allgemeinen Gedanken, die Temperatur des Wärmeträgermediums der ersten Wärmequelle zu erfassen und bei der Steuerung der Ventilanordnung zumindest als zusätzlichen Parameter zu berücksichtigen.

Auf diese Weise kann gemäß einer bevorzugten Ausführungsform der Erfindung gewährleistet werden, daß die erste Wärmequelle bei hinreichender Temperatur immer in den Wärmeträgerkreislauf mit dem Wärmetauscher eingebunden wird bzw. bleibt. Die zweite Wärmequelle braucht dann nur noch bei mangelnder Wärmeleistung der ersten Wärmequelle in Betrieb genommen zu werden. Im übrigen wird die Gleichförmigkeit der Heizleistung des Wärmetauschers durch Vermeidung unnötiger thermischer Abkopplungen der ersten Wärmequelle erhöht, wobei außerdem gegebenenfalls auch die Restwärme der ersten Wärmequelle, etwa die Restwärme eines stillgesetzten Verbrennungsmotors, wirksam ausgenutzt werden kann.

Grundsätzlich können für die Erfindung beliebige thermische Arbeits- bzw. Stellelemente eingesetzt werden.

Wegen ihrer konstruktiven Einfachheit sind jedoch rein mechanisch arbeitende thermische Stellelemente, die aus einem Material mit einer ausgeprägt temperaturabhängigen, reversiblen Formänderung bestehen, bevorzugt. Hierbei handelt es sich insbesondere um Bimetall-Arbeitselemente und in ganz besonders bevorzugter Weise um Arbeitselemente aus einem Formgedächtnis-Material, insbesondere einer Formgedächtnis-Legierung (= Shape Memory alloy = SMA).

Die Arbeitselemente aus Formgedächtnis-Legierung können beispielsweise nach Art von Schraubendruckfedern aus einem Draht aus Formgedächtnis-Legierung gewickelt und derart ausgebildet sein, daß sie unterhalb einer Sprungtemperaturzone eine kurze Länge und oberhalb dieser Sprungtemperaturzone eine große Länge bzw. eine große Druckspannung aufweisen, wenn sie oberhalb der Sprungtemperaturzone durch Zwangskräfte in ihrem verkürzten Zustand gehalten werden. Damit besteht die Möglichkeit, die Ventilanordnung mittels derartiger "Federn" durch Über- bzw. Unterschreitung der Sprungtemperaturzone in einen gewünschten Zustand zu stellen bzw. in diesem Zustand zu halten.

Gemäß einer besonders zweckmäßigen Ausführungsform der Erfindung ist vorgesehen, die Ventilanordnung einerseits durch fluidische Kräfte im System des Wärmeträgermediums zu steuern und dieser fluidischen Steuerung andererseits eine temperaturabhängige Steuerung zu überlagern, welche durch thermische Stellelemente bewirkt wird.

Im übrigen wird hinsichtlich der Einzelheiten bevorzugter Merkmale auf die Ansprüche sowie die nachfolgende Erläuterung bevorzugter Ausführungsformen verwiesen, die anhand der Zeichnung beschrieben werden.

Dabei zeigt
- Fig. 1: eine schaltplanartige Darstellung einer bevorzugten Ausführungsform des erfindungsgemäßen Heizsystems,
- Fig. 2: eine konstruktivere Darstellung einer vorteilhaften Ausgestaltung des Teilsystems II in Fig. 1,
- Fig. 3: eine Darstellung einer zweckmäßigen Ausführungsform eines Absperrventiles im Schließzustand,
- Fig. 4: eine Darstellung dieses Ventiles im geöffneten Zustand,
- Fig. 5: eine abgewandelte Ausführungsform des Absperrventiles im Schließzustand und
- Fig. 6: die Offenstellung dieses letzteren Ventiles.

Ein als Heizkörper wirkender Wärmetauscher 1, der zur Beheizung eines Innenraumes eines nicht dargestellten Fahrzeuges dient und zu diesem Zweck im Luftstrom eines nicht dargestellten Gebläses angeordnet sein kann, ist über einen Wasserkreislauf, dessen Wasser als Wärmeträgermedium dient, thermisch mit einem zum Antrieb des Fahrzeuges dienenden Verbrennungsmotor 2, welcher eine erste Wärmequelle bildet, und/oder mit einem unabhängig vom Motor 2 betreibbaren Brenner 3 koppelbar, welcher eine zweite Wärmequelle bildet.

Zu diesem Zweck ist der Wärmetauscher 1 innerhalb des Wasserkreislaufes mit seiner Ausgangsleitung 4 einerseits mit einer Rücklaufleitung 5 verbunden, die an die Saugseite einer druckseitig mit dem Motor verbundenen ersten Wasserpumpe 6 angeschlossen ist. Andererseits ist die Rücklaufleitung 5 über ein Rückschlagventil 7, welches eine Strömung in Richtung der Rücklaufleitung 5 verhindern soll, mit der Saugseite einer zweiten Wasserpumpe 8 verbunden, die druckseitig über eine Eingangsleitung 9 mit dem Wassereingang des Brenners 3 verbunden ist, dessen Wasserausgang an den Eingang des Wärmetauschers 1 anschließt. Zwischen dem Rückschlagventil 7 und der Saugseite der zweiten Wasserpumpe 8 ist der Ausgangsanschluß 10 eines Absperrventiles 11 angeschlossen, dessen Eingang über eine Vorlaufleitung 12 mit einem Wasserausgang des Verbrennungsmotors 2 verbunden ist.

Das Absperrventil 11 wird einerseits durch Druckdifferenzen im Wassersystem gesteuert. Dazu wird der Steuerkörper des schematisch als Schieberventil dargestellten Absperrventiles 11 einerseits vom Druck in der Vorlaufleitung 12 bzw. am Eingang des Absperrventiles 11 in Richtung seiner dargestellten Öffnungslage und andererseits vom Druck der Druckseite der zweiten Wasserpumpe 8 in seine Schließstellung gedrängt. Dies ist durch strichlierte Steuerleitungen 11' und 11'' angedeutet. Außerdem wirkt der Steuerkörper des Absperrventiles 11 mit einem thermischen Arbeits- bzw. Stellelement 13 zusammen, welches nach Art einer Schraubendruckfeder ausgebildet ist und aus einer Formgedächtnis-Legierung besteht. Dieses Element 13 ist thermich mit dem Wasser in der Vorlaufleitung 12 bzw. am Eingang des Absperrventiles 11 gekoppelt. Oberhalb einer Sprungtemperatur Tₛ such das Element 13 eine gestreckte Form anzunehmen, so daß es den Steuerkörper des Absperrventiles 11 in der dargestellten Öffnungslage zu halten bzw. in diese Lage zu bringen sucht. Bei Abkühlung unter die Sprungtemperatur Tₛ geht das Element 13 in einen verkürzten Zustand über, so daß es den Steuerkörper des Absperrventiles 11 nicht mehr in dessen Offenstellung zu drängen vermag bzw. einer Umschaltung in die Schließlage keinen nennenswerten Widerstand entgegensetzen kann.

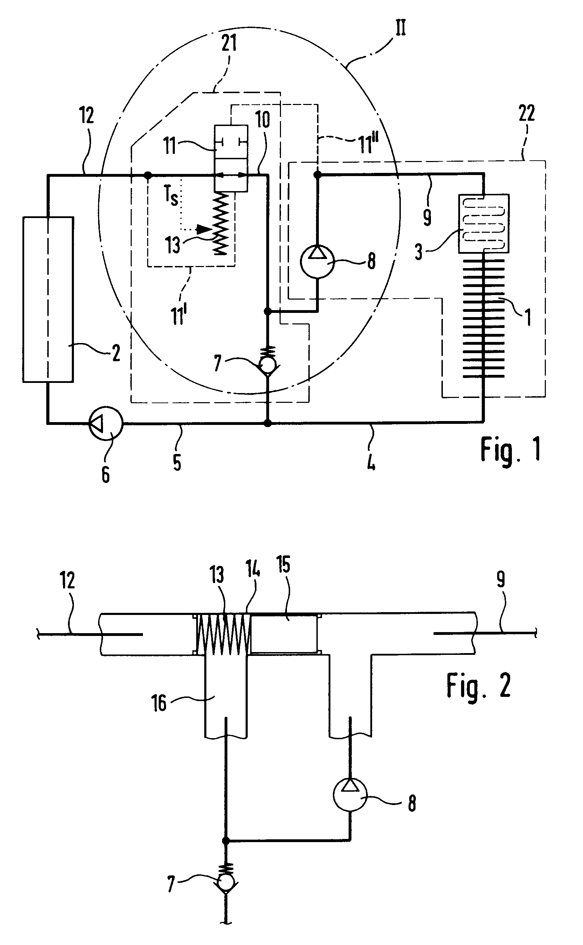

Das in Fig. 1 dargestellte System funktioniert wie folgt:

Zunächst wird davon ausgegangen, daß die erste Wasserpumpe 6 stillsteht und an dem Arbeits- bzw. Stellelement 13 des Absperrventiles 11 eine Temepratur vorliegt, die deutlich unter der Sprungtemperatur Tₛ liegt; die zweite Wasserpumpe 8 soll in Betrieb gesetzt sein. Bei diesem Betriebszustand ist der Wasserdruck auf der Druckseite der zweiten Wasserpumpe 8 und damit auch der Wasserdruck in der Steuerleitung 11'' deutlich größer als der Wasserdruck in der Vorlaufleitung 12 bzw. am Eingang des Absperrventiles 11 sowie in der Steuerleitung 11'. Außerdem kann das Element 13 bei der angegebenen Temperatur keine den Steuerkörper des Absperrventiles 11 in die Offenstellung drängende Kraft erzeugen. Dementsprechend wird das Absperrventil 11 hydraulisch in die (in Fig. 1 nicht dargestellte) Schließlage gestellt bzw. in der Schließlage gehalten. Die im Förderbetrieb befindliche zweite Wasserpumpe 8 hält somit einen "kleinen" Wasserkreislauf aufrecht, der von der Druckseite der Pumpe 8 über den Brenner 3 und nachfolgend den Wärmetauscher 1 sowie das Rückschlagventil 7 zur Saugseite der Pumpe 8 führt.

Wenn nun zusätzlich die erste - typischerweise als hydrodynamische Pumpe ausgebildete - Wasserpumpe 6 in Betrieb gesetzt wird und hinreichend schnell läuft, derart, daß in der Vorlaufleitung 12 und damit auch in der Steuerleitung 11' ein Wasserdruck aufgebaut wird, der größer ist als der Wasserdruck auf der Druckseite der zweiten Wasserpumpe 8 sowie in der Steuerleitung 11'', so schaltet das Absperrventil 11 auch dann in die in Fig. 1 dargestellte Offenstellung um, wenn am Element 13 weiterhin eine Temperatur deutlich unter der Sprungtemperatur Tₛ vorliegt. Nunmehr wird von beiden Pumpen 6 und 8 ein "großer" Wasserkreislauf aufrechterhalten, der nacheinander über den Verbrennungsmotor 2, das Absperrventil 11, die zweite Pumpe 8, den Brenner 3, den Wärmetauscher 1 sowie die erste Pumpe 6 zum Motor 2 führt. Auf diese Weise kann die Wärme des Verbrennungsmotors 2 und bei gleichzeitigem Betrieb des Brenners 3 auch dessen Wärme zu Heizzwecken herangezogen werden. Im übrigen kann die vom Brenner 3 erzeugte Wärme bei kälterem Motor auch zu dessen schneller Erwärmung ausgenutzt werden.

Abhängig vom Druckverhältnis des Pumpen 6 und 8 können sich "druckabhängige" Zwischenstellungen des Ventiles 11 einstellen, d.h. das Ventil 11 steuert entsprechend seiner Position den Wasserdurchsatz am Wärmetauscher 1 sowie am Motor 2.

Falls nun der Motor 2 mit niedriger Drehzahl und die von ihm angetriebene erste Wasserpumpe 6 entsprechend langsam laufen sollten, bleibt der Wasserdruck in der Vorlaufleitung 12 sowie in der Steuerleitung 11' regelmäßig geringer als der Wasserdruck auf der Druckseite der anderen Pumpe 8 sowie in der Steuerleitung 11''. Sollte nun die Wassertemperatur am Element 13 oberhalb der Sprungtemperatur Tₛ liegen, so sucht sich das Element 13 zu strecken, mit der Folge, Folge, daß es den Steuerkörper des Absperrventiles 11 mit größerer Kraft in die in Fig. 1 dargestellte Offenstellung drängt bzw. in dieser Stellung hält, und zwar trotz des im Vergleich zum Wasserdruck in der Steuerleitung 11'' geringen Wasserdruckes in der Steuerleitung 11'. Bei hinreichend warmem Motor 2 wird dieser also auch dann thermisch nicht vom Wärmetauscher 1 abgekoppelt, wenn die erste Wasserpumpe 6 nicht wirksam arbeitet und der Wasserdruck in der Vorlaufleitung 12 bzw. in der Steuerleitung 11' gering bleibt.

Damit das Element 13 unter allen Umständen die Wärme des Motors 2 "merkt", kann vorgesehen sein, daß das Absperrventil 11 auch in Schließstellung noch eine gewisse Durchlässigkeit besitzt und damit funktional einer Drosselstrecke entspricht. Auf diese Weise bleibt bei Betrieb der zweiten Wasserpumpe 8 immer eine schwache restliche Strömung des Wassers vom Motor 2 durch das Absperrventil 11 aufrechterhalten, mit der Folge, daß auch bei entfernter Anordnung des Elementes 13 bzw. des Absperrventiles 11 vom Motor 2 dessen Wassertemperatur am Element 13 wirksam wird.

Wenn der Motor kalt ist und dementsprechend am Element 13 eine Temperatur deutlich unter der Sprungtemperatur Tₛ vorliegt, wird das Absperrventil 1 lediglich entsprechend den Druckdifferenzen zwischen den Steuerleitungen 11' und 11'' betätigt, d.h. das Absperrventil 11 kann nur dann öffnen, wenn die erste Wasserpumpe 6 in der Vorlaufleitung 11 sowie in der Steuerleitung 11' einen größeren Wasserdruck erzeugt.

Gemäß Fig. 2 kann das Absperrventil in prinzipiell sehr einfacher Weise aufgebaut sein. Innerhalb eines die Vorlaufleitung 12 gleichachsig fortsetzenden Rohres oder Kanales 14, welches bzw. welcher durch die dazu gleichachsige Eingangsleitung 9 fortgesetzt wird, ist ein Kolben 15 zwischen zwei Endlagen verschiebbar angeordnet, welcher die Vorlaufleitung 12 und die Eingangsleitung 9 gegeneinander absperrt. Dieser Kolben 15 wird durch das innerhalb des Rohres bzw. Kanales 14 angeordnete, nach Art einer Schraubendruckfeder ausgebildete thermische Arbeits- bzw. Stellelement 13 in seine in Fig. 2 rechte Endlage gedrängt, sobald das Element 13 eine Temperatur oberhalb der Sprungtemperatur Tₛ hat. Vom Rohr bzw. Kanal 14 zweigt seitlich ein Rohr bzw. Kanal 16 ab, dessen Mündung in das Rohr bzw. den Kanal 14 freiliegt, wenn der Kolben 15 seine in Fig. 2 rechte Endlage einnimmt. In der linken Endlage überdeckt der Kolben 15 dagegen die genannte Mündung vollständig bzw. praktisch vollständig, so daß das Rohr bzw. der Kanal 16 gegenüber dem Rohr bzw. Kanal 14 vollständig oder nahezu vollständig abgesperrt wird.

Bei dieser Konstruktion bilden das linke Ende des Rohres bzw. Kanales 14 den Eingang des Absperrventiles 11 sowie die Steuerleitung 11' der Fig. 1. Das rechte Ende des Rohres bzw. Kanales 14 entspricht funktional der Steuerleitung 11'' der Fig. 1. Das Rohr bzw. der Kanal 16 bilden den Ausgang des Absperrventiles 11.

Somit ergibt sich die anhand der Fig. 1 erläuterte Funktion des Absperrventiles 11, denn der Kolben 15 wird in Fig. 2 einerseits durch die Druckdifferenzen zwischen den Wasserdrücken am Eingang des Ventiles 11 sowie auf der Druckseite der Pumpe 8 bzw. in der Eingangsleitung 9 und durch die temperaturabhängige Kraft der Feder 13 gesteuert.

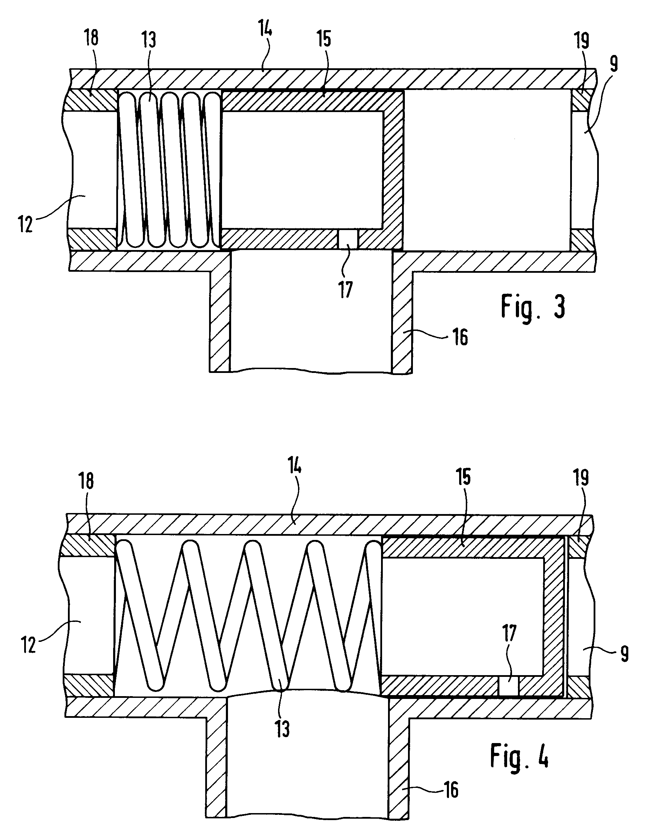

Gemäß den Fig. 3 und 4 kann der Kolben 15 becherartig ausgebildet und mit seinem offenen Stirnende dem Eingang des Ventiles 11 bzw. der Vorlaufleitung 12 zugewandt sein. Durch eine radiale Drosselbohrung 17 in der Umfangswandung des Kolbens 15 wird erreicht, daß auch in der in Fig. 3 dargestellten Schließlage des Absperrventiles 11 noch eine - gedrosselte - Restströmung von der Vorlaufleitung 12 zum Rohr bzw. Kanal 16 und damit zur zweiten Wasserpumpe 8 (vgl. die Fig. 1 bzw. 2) möglich bleibt.

Das schraubenfederartige thermische Arbeits- bzw. Stellelement 13 ist zwischen dem zugewandten Stirnrand einer als festes Federwiderlager im Rohr bzw. Kanal 14 fest angeordneten Hülse 18 und dem zugewandten Stirnrand des Kolbens 15 angeordnet, wobei das Element 13 in der linken Endlage des Kolbens 15 zwischen dem Kolben 15 und der Hülse 18 auf Block zusammengedrückt wird bzw. gegen die Hülse 18 geschoben wird. Die rechte Endlage des Kolbens 15 wird durch eine weitere Hülse 19 begrenzt, die fest im Rohr bzw. Kanal 14 angeordnet ist.

In allen Stellungen des Kolbens 15 hat das Element 13 einen guten Kontakt zu dem durch die Vorlaufleitung 12 zuströmenden Wasser des Motors 2, so daß eine gute thermische Kopplung zwischen dem Element 13 und dem Wasser gegeben ist und das Element 13 wirksam als thermisches Stellelement zu arbeiten vermag.

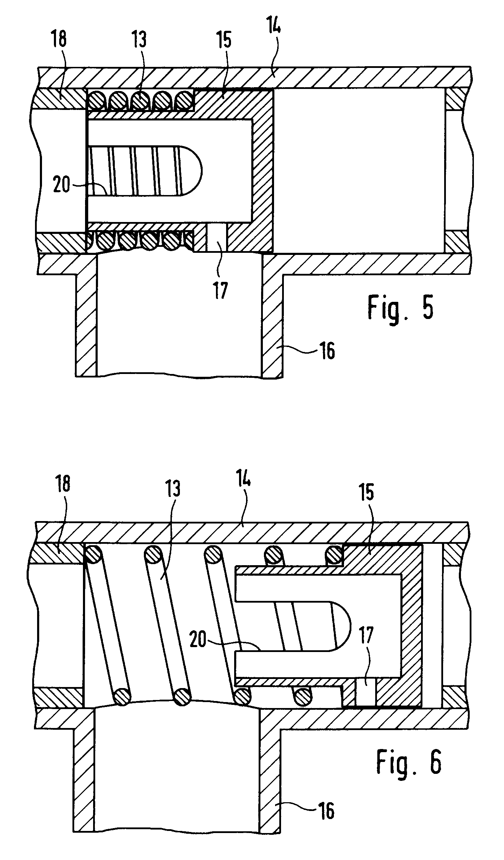

Die in den Fig. 5 und 6 dargestellte Ausführungform unterscheidet sich von der Ausführungsform der Fig. 3 und 4 zunächst dadurch, daß die Umfangswand des Kolbens 15 eine außenseitige Ringstufe aufweist, derart, daß das in den Fig. 5 und 6 linke Ende des Kolbens 15 einen verringerten Außendurchmesser aufweist. Diese Ringstufe dient als kolbenseitiger Anschlag bzw. kolbenseitiges Widerlager des schraubendruckfederartigen thermischen Arbeits- bzw. Stellelementes 13, dessen anderes Ende wiederum mit der Hülse 18 zusammenwirkt, die jedoch im Beispiel der Fig. 5 und 6 bis in unmittelbare Nachbarschaft des Rohres bzw. des Kanales 16 erstreckt ist. In der in Fig. 5 dargestellten Schließlage wirkt darüber hinaus das linke Ende des Kolbens 15 mit der Hülse 18 anschlagartig zusammen, wobei die Hülse 18 auch die Funktion eines Sitzes für den Kolben 15 in dessen Schließstellung gemäß Fig. 5 übernehmen und mit dem zugewandten Kolbenrand dichtend zusammenwirken kann.

Um insbesondere in der Schließlage des Kolbens 15 gemäß Fig. 5 eine gute thermische Kopplung zwischen dem Element 13 und dem Wasser in der Vorlaufleitung 12 bzw. im Innenraum des Kolbens 15 zu gewährleisten, besitzt derselbe im dargestellten Beispiel zum linken Kolbenende hin offene Axialschlitze 20, welche so bemessen sind, daß in Schließlage des Kolbens 15 lediglich ein gedrosselter Verbindungsweg zwischen der Vorlaufleitung 12 und dem Rohr bzw. Kanal 16 erhalten bleibt. Die ebenfalls einen derartigen Drosselweg herstellende Drosselbohrung 17 kann dementsprechend bei der Ausführungsform der Fig. 5 und 6 entfallen.

Ein funktionaler Unterschied der Ausführungsform der Fig. 5 und 6 gegenüber der Ausführungsform nach den Fig. 3 und 4 liegt darin, daß der Kolben 15 in der in Fig. 5 dargestellten Schließlage vom Wasserdruck in der Vorlaufleitung 12 bzw. am Eingang des Ventiles 11 im wesentlichen nur auf einem Querschnitt beaufschlagt wird, der dem Öffnungsquerschnitt der Hülse 18 entspricht, während der Druck auf der Druckseite der Pumpe 8 bzw. in der Eingangsleitung 9 auf den Gesamtquerschnitt des Kolbens wirkt. Dies hat zur Folge, daß bei niedrigen Temperaturen unterhalb der Sprungtemperatur Tₛ, wenn das Element 13 keine bzw. keine nennenswerte Kraft zur Verschiebung des Kolbens 15 in dessen rechte Endlage zu erzeugen vermag, ein vergleichsweise großer Überdruck des Wassers in der Vorlaufleitung 12 bzw. am Eingang des Ventiles 11 relativ zum Wasserdruck auf der Druckseite der Pumpe 8 bzw. in der Eingangsleitung 9 vorliegen muß, wenn das Ventil 11 durch hydraulische Kräfte geöffnet werden soll. Zur Aufrechterhaltung der Offenstellung genügt dann eine verminderte Druckdifferenz.

Der Brenner 3, der Wärmetauscher 1 sowie die Pumpe 8 können zu einem kompakten, komplett einbaufertigen Aggregat zusammengefaßt werden. Das Absperrventil 11 sowie das Rückschlagventil 7 können zu einem komplett im voraus herstellbaren Ventilaggregat zusammengefaßt sein. Dies ist in Fig. 1 schematisch durch die Baugruppen 21 und 22 angedeutet.

Im dargestellten Beispiel arbeitet das Element 13 als Druckfeder, welche durch Vergrößerung ihrer Länge (bzw. Druckkraft) oberhalb der Sprungtemperatur Tₛ ein Ventil umschaltet.

Grundsätzlich ist auch eine Anordnung möglich (insbesondere bei einem als Zugfeder ausgebildeten thermischen Arbeits- bzw. Stellelement), bei der die Verkürzung des Elementes (bzw. die damit einhergehende Erhöhung der Zugkraft) unterhalb der Sprungtemperatur Tₛ für einen Stellhub ausgenutzt wird.

## Patentansprüche

1. Heizsystem, insbesondere für Kraftfahrzeuge, bei dem ein nach Art eines Heizkörpers wirkender Wärmetauscher über einen fluidischen Wärmeträgerkreislauf, insbesondere Wasserkreislauf, thermisch mit einer ersten Wärmequelle, insbesondere einem zum Antrieb des Fahrzeuges dienenden Verbrennungsmotor, und/oder einer weiteren Wärmequelle, insbesondere einem vom Fahrzeugmotor unabhängig betreibbaren Brenner, thermisch koppelbar und eine Ventilanordnung in Abhängigkeit vom Betriebszustand der ersten Wärmequelle zwischen einem ersten Zustand, bei dem das Wärmeträgermedium bzw. zumindest ein großer Teil desselben über beide Wärmequellen geleitet wird, und einem zweiten Zustand umschaltbar ist, bei dem das Wärmeträgermedium zumindest im wesentlichen nur über die zweite Wärmequelle geleitet wird,
nach Patent ... (P 43 24 371.1-16),
dadurch gekennzeichnet,
daß die Ventilanordnung (11) ein mit dem Wärmeträgermedium der ersten Wärmequelle (2) thermisch gekoppeltes thermisches Stellelemente (13) aufweist, welches oberhalb eines Schwellwertes (Tₛ) der Temperatur des Wärmeträgermediums den ersten Zustand der Ventilanordnung (11) einstellt oder dessen Einstellung erleichtert bzw. freigibt.

2. Heizsystem nach Anspruch 1,
dadurch gekennzeichnet,
daß das thermische Stellelement (13) die Ventilanordnung (11) oberhalb des Schwellwertes (Tₛ) der Temperatur des Wärmeträgermediums immer in den ersten Zustand umschaltet bzw. in diesem Zustand hält.

3. Heizsystem nach Anspruch 1 oder 2,
dadurch gekennzeichnet,
daß das thermische Stellelement (13) als Bimetall-Element ausgebildet ist.

4. Heizsystem nach Anspruch 1 oder 2,
dadurch gekennzeichnet,
daß das thermische Stellelement (13) aus einem Material mit Formgedächtnis, insbesondere aus einer Formgedächtnis-Legierung, besteht.

5. Heizsystem nach einem der Ansprüche 1 bis 4,
dadurch gekennzeichnet,
daß eine erste Fördervorrichtung bzw. Pumpe (6) vom Wärmetauscher (1) kommendes Wärmeträgermedium über die erste Wärmequelle (2) dem Eingang eines Absperrventiles (11) zuführt, dessen Ausgang (16) mit der Saugseite einer zweiten Fördervorrichtung bzw. Pumpe (8) verbunden ist, die druckseitig mit der zweiten Wärmequelle (3) und saugseitig, parallel zur Verbindung mit dem Ausgang (16) des Absperrventiles (11), über ein Rückschlagventil (7), welches im wesentlichen nur eine Strömung zur zweiten Fördervorrichtung bzw. Pumpe (6) zuläßt, mit einer von der Ausgangsseite des Wärmetauschers (1) zur Saugseite der ersten Fördervorrichtung bzw. Pumpe (6) bzw. zur ersten Wärmequelle (2) führenden Wärmeträgerleitung (4,5) verbunden ist, und
daß das Absperrventil (11) vom Fluiddruck auf seiner Eingangsseite in öffnender Richtung und vom Fluiddruck auf der Druckseite der zweiten Fördervorrichtung bzw. Pumpe (8) in schließender Richtung beaufschlagt wird.

6. Heizsystem nach Anspruch 5,
dadurch gekennzeichnet,
daß das Absperrventil (11) einen kolbenartigen Verschlußkörper (15) aufweist, der einen Kolbenarbeitsraum (16) verschiebbar unterteilt, dessen eines Ende den Eingangsanschluß des Absperrventiles (11) bildet bzw. damit kommuniziert und dessen anderes axiales Ende einen mit der Druckseite der zweiten Fördervorrichtung bzw. Pumpe (8) verbundenen Druckanschluß bildet bzw. damit kommuniziert, und
daß der Verschlußkörper (15) in seiner zum einen axialen Ende des Kolbenarbeitsraumes (16) vorgeschobenen Endlage (zweiter Zustand) den radial vom Kolbenarbeitsraum (14) abzweigenden Ausgang (16) des Absperrventiles (11) im wesentlichen schließend überdeckt und in seiner zum anderen axialen Ende des Kolbenarbeitsraumes (14) vorgeschobenen Endlage (erster Zustand) freigibt.

7. Heizsystem nach Anspruch 5 oder 6,
dadurch gekennzeichnet,
daß ein am Eingang des Absperrventiles (11) angeordnetes, nach Art einer Schraubendruckfeder ausgebildetes thermisches Arbeits- bzw. Stellelement (13) oberhalb des Temperatur-Schwellwertes (Tₛ) eine Form bzw. einen Zustand annimmt, in der bzw. dem dieses Element (13) den Verschlußkörper (15) in seiner den Ausgang (16) freigebenden Lage hält bzw. mit großer Kraft in diese Lage drängt.

8. Heizsystem nach einem der Ansprüche 5 bis 7,
dadurch gekennzeichnet,
daß der Verschlußkörper (15) des Absperrventiles (11) als Differentialkolben ausgebildet ist, derart, daß die in Schließlage fluidisch in Öffnungsrichtung des Verschlußkörpers (15) beaufschlagte Wirkfläche kleiner ist als die fluidisch in Richtung der Schließlage beaufschlagte Wirkfläche.

9. Heizsystem nach einem der Ansprüche 1 bis 8,
dadurch gekennzeichnet,
daß die Ventilanordnung bzw. das Absperrventil (11) auch im zweiten Zustand bzw. im Schließzustand noch eine gedrosselte Verbindung zwischen der ersten Wärmequelle (2) und dem Wärmetauscher (1) freilassen
und dieser gedrosselte Strömungsweg unmittelbar am thermischen Stellelement (13) vorbeiführt.
